# FASCICULE DE BREVET EUROPEEN

(11) **EP 3 165 194 B1**
(45) Date de publication et mention de la délivrance du brevet: **24.07.2019**
(21) Numéro de dépôt: 15193652.3
(22) Date de dépôt: 09.11.2015
(51) Int. Cl.: A61D 9/00, A01K 13/00

(54) **DISPOSITIF DE SOUTIEN D'UN MEMBRE D'UN ANIMAL**
VORRICHTUNG ZUM STÜTZEN EINES KÖRPERGLIEDS EINES TIERES
DEVICE FOR SUPPORTING A LIMB OF AN ANIMAL

(43) Date de publication de la demande: 10.05.2017
(73) Titulaire: Duquesne Zahid, Déborah, 1212 Grand-Lancy, Genève (CH)
(72) Inventeur: Duquesne Zahid, Déborah, 1212 Grand-Lancy, Genève (CH)
(74) Mandataire: Moinas & Savoye SARL

(56) Documents cités:
- WO-A1-2015/089084
- DE-U1- 20 114 377
- GB-A- 2 308 285
- GB-A- 2 394 666
- US-A- 2 449 410
- US-A- 4 424 809

## Description

La présente invention concerne un dispositif de soutien d'un membre d'un animal tel qu'un cheval.

L'invention concerne aussi un procédé de fabrication d'un tel dispositif de soutien ainsi qu'un procédé d'utilisation de ce dispositif.

Dans le domaine de l'équitation, il est connu d'utiliser un dispositif de soutien d'un membre d'un cheval notamment afin d'assurer un maintien des systèmes ligamentaires et tendineux de ce dernier en particulier après des séances de travail. Un tel dispositif autrement appelé « padd » est prévu pour favoriser la circulation sanguine au niveau de ce membre et permettre aux tendons de se reposer. Pour ce faire, ce dispositif généralement souple est positionné au niveau d'une partie antérieure du membre du cheval, essentiellement les canon, boulet et pâturon, en étant enroulé autour de cette dernière.

Cependant, un inconvénient majeur d'un tel dispositif de soutien est lié au fait qu'il n'est pas adapté pour assurer un maintien efficace de cette partie antérieure du membre du cheval. En effet, ces dispositifs de soutien sont souvent de très faible épaisseur et ne permettent pas de réaliser un maintien homogène/uniforme des systèmes ligamentaires et tendineux localisés au niveau de cette partie. De plus, lorsqu'il est positionné sur cette partie du membre du cheval, il est souvent enroulé autour de cette dernière en créant des plissements au niveau de la peau du cheval ce qui affectent alors la circulation sanguine et la bonne répartition des tensions notamment sur cette partie du membre.

En outre, ces dispositifs de soutien ne sont pas ergonomiques car il requiert souvent un temps conséquent pour leur mise en place sur ce membre. Parmi les dispositifs de l'état de la technique, on peut mentionner ceux divulgués dans les documents GB2394666A, DE20114377U1, GB2308285A, US4424809A, WO2015/089084A1, US2449410A.

La présente invention vise à pallier ces inconvénients liés aux dispositifs de soutien de l'état de la technique notamment en soutenant efficacement les systèmes ligamentaires et tendineux du membre du cheval.

Dans ce dessein, l'invention concerne un dispositif de soutien d'un membre d'un animal selon la revendication 1, notamment d'un cheval, comprenant une enveloppe apte à être agencée au niveau d'une partie antérieure dudit membre, notamment pourvue de systèmes tendineux et ligamentaires, dans laquelle est agencé un élément structurel en mousse.

Dans certains modes de réalisation :
- l'élément structurel en mousse comprend une pluralité de canaux susceptibles de relier des faces supérieure et inférieure dudit élément structurel entre elles ;
- des canaux sont répartis de manière homogène dans une épaisseur de cet élément structurel en mousse ;
- l'enveloppe comprend des première et deuxième composantes formant un logement dans lequel l'élément structurel en mousse est susceptible d'être positionné ;
- le dispositif de soutien comprend une housse maillée dans laquelle est inséré l'élément structurel en mousse avant d'être agencé dans un logement de ladite enveloppe ;
- l'enveloppe comprend une ouverture pourvue d'un mécanisme de fermeture/ouverture d'un logement de ladite enveloppe ;
- un logement de ladite enveloppe a une forme complémentaire à celle dudit élément structurel en mousse ;
- des première et deuxième composantes de ladite enveloppe sont reliées entre elles de manière amovible ;
- ladite enveloppe comprend une troisième composante comprenant une face intérieure pourvue d'au moins un premier élément de fixation ;
- l'élément structurel en mousse comprend une face supérieure sensiblement plane et une face inférieure ondulée comprenant au moins deux sommets d'ondulation ;
- une première composante de ladite enveloppe comprend une face extérieure pourvue d'au moins un deuxième élément de fixation ;
- une première composante est réalisée dans une matière non-extensible et une deuxième composante dans une matière extensible ;
- le dispositif de soutien a une forme générale incurvée, et
- le dispositif de soutien est défini de manière à assurer un maintien des systèmes ligamentaires et tendineux localisés au niveau de ladite partie antérieure dudit membre.

L'invention concerne également procédé de fabrication d'un tel dispositif de soutien d'un membre d'un animal selon la revendication 11, notamment comprenant une étape d'agencement d'un élément structurel en mousse dans une enveloppe comprise dans ledit dispositif de soutien.

Avantageusement, le procédé comprend une étape d'assemblage d'une première composante avec une deuxième composante de ladite enveloppe de sorte à définir un logement dans lequel l'élément structurel en mousse est agencé.

L'invention concerne aussi un procédé d'utilisation de ce dispositif de soutien d'un membre d'un animal selon la revendication 13, notamment d'un cheval, comprenant une étape de mise en place du dispositif de soutien sur ledit membre, l'étape de mise en place comprenant une étape de positionnement d'une enveloppe du dispositif de soutien sur une partie antérieure dudit membre notamment pourvue de systèmes ligamenteux et tendineux de l'animal.

En particulier, le procédé d'utilisation comprend une étape de verrouillage dudit dispositif de soutien sur ladite partie antérieure à partir d'au moins un des premier et deuxième éléments de fixation.

D'autres avantages et caractéristiques de l'invention apparaîtront mieux à la lecture de la description d'un mode de réalisation préféré qui va suivre, en référence aux figures, réalisé à titre d'exemple indicatif et non limitatif :
- les figures 1 et 2 représentent chacune une vue d'un dispositif de soutien d'un membre d'un animal tel qu'un cheval selon un mode de réalisation de l'invention ;
- les figures 3 et 4 représentent chacune une vue du dispositif de soutien mis en place sur une partie antérieure du membre selon le mode de réalisation de l'invention ;
- la figure 5 est une vue en coupe transversale selon le plan de coupe V-V du dispositif de soutien représenté sur la figure 4 selon le mode de réalisation de l'invention ;
- la figure 6 est une vue éclatée du dispositif de soutien selon le mode de réalisation de l'invention ;
- la figure 7 est une vue en coupe d'un élément structurel en mousse compris dans le dispositif de soutien selon le mode de réalisation de l'invention ;
- la figure 8 est un logigramme relatif à un procédé de fabrication d'un dispositif de soutien selon le mode de réalisation de l'invention, et
- la figure 9 est un logigramme relatif à un procédé d'utilisation du dispositif de soutien selon le mode de réalisation de l'invention.

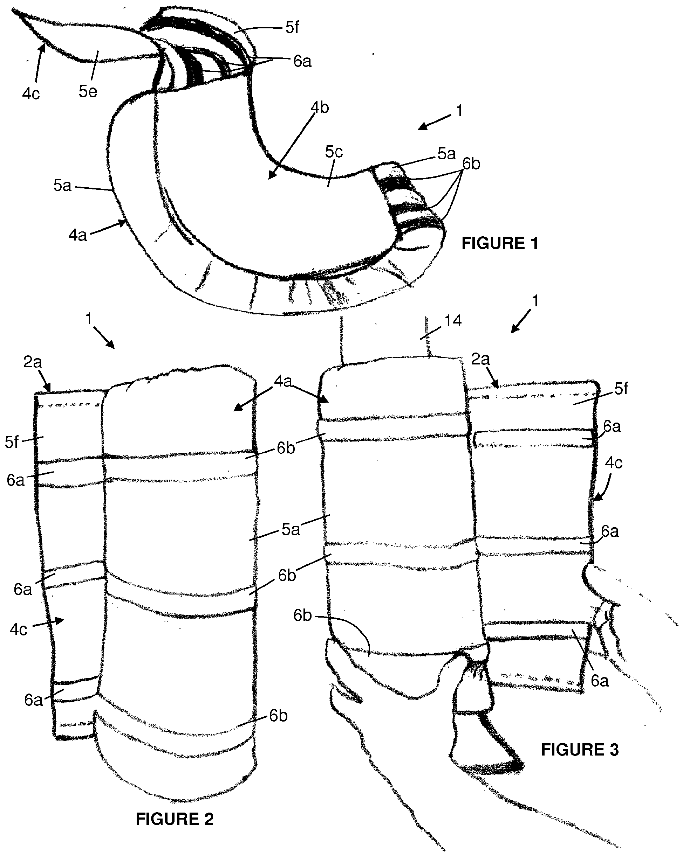

Sur les figures 1 à 7 est représenté un dispositif de soutien 1 d'un membre d'un être vivant. Dans le contexte de l'invention, cet être vivant peut être un être humain ou encore un animal de type quadrupède. Dans la présente description et pour une meilleure compréhension de l'invention, le mode de réalisation de ce dispositif de soutien 1 est mis en oeuvre de manière non limitative au niveau d'un membre 14 d'un cheval.

Dans le mode de réalisation visible sur les figures 1 à 6, le dispositif de soutien 1 est disposé au niveau d'un membre 14 du cheval et en particulier sur une partie antérieure de ce membre 14, essentiellement les canon, boulet et pâturon. Ce dispositif de soutien 1 permet d'assurer un maintien des systèmes ligamentaires et tendineux localisés dans cette partie antérieure en particulier après des séances de travail lors desquelles le cheval a fourni des efforts. Ce dispositif de soutien participe également à favoriser la circulation sanguine au niveau de ce membre 14 et permet aux tendons de se reposer. Il peut également être utilisé par exemple lors du transport du cheval, à la suite d'une séance de travail, lors du repos de ce dernier dans un box ou encore durant des phases de traitement et d'application de produit décongestionnant ou de traitement de boiteries diverses de ses membres 14.

On notera qu'un tel dispositif de soutien peut être par exemple un dispositif de maintien ou encore un dispositif de contention d'un membre du cheval.

Dans ce mode de réalisation, le dispositif de soutien 1 comprend une enveloppe 2a, un élément structurel en mousse 3a ainsi qu'au moins des premier et deuxième éléments de fixation 6a, 6b. Cet élément structurel en mousse 3a est agencé dans l'enveloppe 2a et ce, de préférence de manière amovible notamment pour assurer l'entretien du dispositif 1 sans détériorer l'élément structurel 3a et/ou l'entretien de cet élément structurel 3a.
Le dispositif de soutien 1 peut comprendre aussi une housse maillé (non représentée) encore appelée filet maillé, dans laquelle est inséré l'élément structurel en mousse 3a avant d'être agencé dans cette enveloppe 2a. Une telle house permet ainsi de pouvoir manipuler plus facilement cet élément structurel en mousse 3a sans l'endommager lors de son insertion/extraction de l'enveloppe 2a. De plus, dans le mode de réalisation de ce dispositif 1, il permet de contribuer à maintenir l'élément structurel 3a dans une forme générale cylindrique ou incurvée ou encore dans une forme enrobante ou galbée visible sur la figure 1. Cette house peut être réalisée en matière extensible comprenant du coton.

Dans ce mode de réalisation, l'enveloppe 2a comprend des première et deuxième composantes 4a, 4b qui sont reliées l'une à l'autre de sorte à former un logement de forme complémentaire à celle de l'élément structurel en mousse 3a. Ce logement peut comprendre une ouverture 12, au travers de laquelle l'élément structurel en mousse 3a est inséré afin d'être agencé dans ce logement. Cette ouverture 12 comporte des bordures pourvues d'un mécanisme de fermeture/ouverture 9 du logement permettant ainsi de pouvoir insérer/extraire l'élément structurel en mousse 3a du logement. Ce mécanisme de fermeture/d'ouverture 9 du logement peut comprendre par exemple une fermeture éclair ou à glissière, au moins un bouton-pression, au moins un élément de clipage, au moins un aimant, au moins une bande à accroches du type velcro™ ou encore une combinaison d'au moins deux de ces mécanismes 9 entre eux. Dans ces conditions, l'élément structurel en mousse 3a est dit amovible ou extractible.

Sur les figures 1 à 6, les première et deuxième composantes 4a, 4b, de l'enveloppe 2a comprennent chacune des faces extérieure et intérieure 5a, 5b, 5c. Les faces intérieures 5b de ces deux composantes 4a, 4b forment une paroi interne du logement et sont en tout ou partie en contact avec des faces supérieure et inférieure 7a, 7b de l'élément structurel en mousse 3a. La face extérieure 5c de la deuxième composante 4b est définie pour être en contact avec le membre 14 du cheval, en particulier avec la partie antérieure de ce membre 14 au niveau de laquelle est disposé l'enveloppe 2a et donc le dispositif de soutien 1.

La première composante 4a de l'enveloppe 2a de ce dispositif 1 est réalisée en une matière non-extensible. Par exemple, la première composante 4a peut être un tissu comprenant du coton naturel ou synthétique qui est fabriqué à partir de fils inextensibles. Ce tissu peut comprendre 100% de coton synthétique ou naturel ou encore un mélange de ces deux types de coton. Alternativement, ou en combinaison avec au moins un de ces deux types de coton, le tissus peut comporter par exemple des matières telles que du : Gore-tex™, néoprène, polyamide, polyester, céramique, magnétique ou encore une combinaison d'au moins deux de ces matières entre elles. Cette première composante 4a peut avoir :
- une longueur L1 comprise entre 280 et 500 mm, et de préférence de 390 mm, et
- une largeur L2 comprise entre 280 et 400 mm, et de préférence de 340 mm.

Dans cette première composante, l'ouverture du logement comprise dans l'enveloppe 2a peut être agencée dans ce contexte au niveau de sa face extérieure 5a. De plus, cette première composante 4a comprend au moins un deuxième élément de fixation 6b du dispositif de soutien 1. Chaque deuxième élément de fixation 6b est défini sur tout ou partie de la face extérieure 5a de cette première composante 4a. Dans ce mode de réalisation, le deuxième élément de fixation 6b peut être disposé sur la face extérieure 5a sur tout ou partie de la longueur L1 de la première composante 4a.
Dans cette première configuration, la deuxième composante 4b de l'enveloppe 2a de ce dispositif 1 est définie pour être en contact avec la partie antérieure du membre 14 susceptible d'être soutenu par ce dispositif de soutien 1, ici la partie antérieure du membre 14. Elle est réalisée en une matière extensible. Par exemple, la deuxième composante 4b peut être un tissu extensible comprenant du coton naturel ou synthétique qui est fabriqué par combinaison de fils élastiques spéciaux et de fils inextensibles. Son élasticité peut être longitudinale, transversale ou dans les deux directions. Dans ce contexte, d'autres tissus extensibles peuvent être utilisés comprenant par exemple des matières telles que du : Gore-tex™, néoprène, laine, polyamide, polyester, céramique ou encore une combinaison d'au moins deux de ces matières entre elles. Cette deuxième composante 4b peut avoir :
- une longueur L3 comprise entre 350 et 410 mm, et de préférence de 380 mm, et
- une largeur L4 comprise entre 250 et 310 mm, et de préférence de 280 mm.

On notera, que la longueur L3 de la deuxième composante 4b est de préférence toujours inférieure à la longueur L1 de la première composante 4a afin notamment de maintenir le dispositif de soutien 1 dans une forme générale cylindrique ou incurvée ou encore dans une forme enrobante ou galbée visible sur la figure 1. Ainsi, en ayant une telle forme, le dispositif de soutien 1 peut être mis en place de manière rapide et facile au niveau de la partie antérieure du membre 14 à soutenir.

Dans ce mode de réalisation, les première et deuxième composantes 4a, 4b, de cette enveloppe 2a peuvent être reliées entre elles de manière amovible.

Dans cette première configuration du dispositif de soutien 1, l'enveloppe 2a comprend aussi une troisième composante 4c comprenant des faces extérieure et intérieure 5e, 5f et pouvant correspondre à un rabat. Cette troisième composante 4c est de préférence réalisée en une matière non-extensible comme la première composante 4a, cette matière pouvant également être souple. Cependant, dans une variante, elle peut être réalisée dans une matière extensible comme la deuxième composante 4b. Cette troisième composante 4c est reliée à la première composante 4a notamment à une de ses deux extrémités définissant sa largeur L2. Elle peut alternativement être reliée à une des deux extrémités définissant la largeur L4 de la deuxième composante 4b. Cette troisième composante 4c peut avoir :
- une longueur L7 comprise entre 100 et 180 mm, et de préférence de 140 mm, et
- une largeur L8 comprise entre 280 et 400 mm, et de préférence de 340 mm.

Cette troisième composante 4c comprend au moins un premier élément de fixation 6a qui est apte à coopérer avec au moins un deuxième élément de fixation 6b complémentaire afin d'assurer une liaison mécanique entre les première et troisième composantes 4a, 4c. Chaque premier élément de fixation 6a est défini sur tout ou partie de la face intérieure 5f de cette troisième composante 4c. Dans ce mode de réalisation, le premier élément de fixation 6a peut être disposé sur la face intérieure 5f sur tout ou partie de la longueur L7 de la troisième composante 4c et ce, de façon à ce qu'elle coopère de manière optimale avec le deuxième élément de fixation 6b complémentaire. Dans cette configuration, chaque premier et deuxième élément de fixation 6a, 6b peut comprendre une bande à accroches du type velcro™ ayant :
- pour chaque premier élément de fixation 6a :
   ▪ une longueur comprise entre 200 et 280 mm, de préférence 240 mm, et
   ▪ une largeur comprise entre environ 15 et 25 mm, et de préférence de 20mm.
- pour chaque deuxième élément de fixation 6b :
   ▪ une longueur comprise entre 100 et 180 mm, de préférence 140 mm, et
   ▪ une largeur comprise entre environ 15 et 25 mm, et de préférence de 20mm.

Alternativement, ces premier et deuxième éléments de fixation 6a, 6b peuvent comprendre par exemple un bouton-pression, un élément de clipage ou encore un aimant. On notera que ce dispositif comprend autant de premiers éléments de fixation 6a qu'il comporte de deuxièmes éléments de fixation 6b.

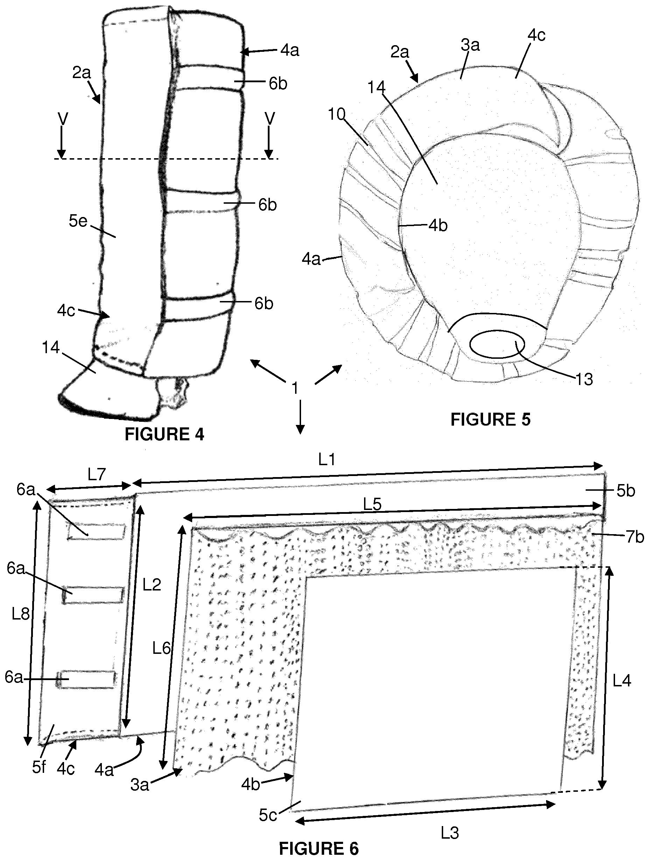

Sur les figures 5 à 7, l'élément structurel en mousse 3a utilisée dans ce mode de réalisation du dispositif de soutien 1, comprend les faces supérieure et inférieure référencées 7a et 7b. Cet élément structurel 3a est une mousse dite « perforée » car elle comprend une pluralité de canaux 10 reliant les faces supérieure et inférieure 7a, 7b entre elles en traversant l'épaisseur E1, E2 de cet élément structurel 3a. On notera que tous les canaux 10 peuvent ainsi déboucher au niveau de ces faces supérieure et inférieure 7a, 7b, ou seulement une partie d'entre eux.

Chaque canal 10 a de préférence une section de forme circulaire ayant un diamètre compris entre 3500 et 4500 µm, et qui est de préférence de 4000 µm. Les canaux 10 peuvent être distribués de manière homogène dans cet élément structurel en mousse 3a. Dans cette configuration, le centre de chaque canal 10 est espacé du centre d'un autre canal 10 situé dans sa proximité immédiate, d'une distance comprise entre 7500 et 11500 µm, et de préférence de 10000 µm. Avantageusement, ces canaux 10 favorisent la ventilation de l'élément structurel 3a et l'évacuation de la chaleur et de la transpiration pouvant provenir de la partie antérieure du membre 14 à soutenir. De plus, ces canaux 10 participent à réduire le poids de cet élément structurel 3a.

L'élément structurel en mousse 3a est de préférence réalisé en latex synthétique ou en latex naturel ou encore à partir d'un mélange de ces deux types de latex. Cet élément structurel en mouse 3a est sans odeur et possède des caractéristiques d'élasticité qui lui confèrent une grande durabilité dans le temps ainsi que des propriétés hypoallergéniques.

On notera qu'un tel élément structurel en mousse 3a peut être réalisé selon des procédés de fabrication connus dans l'état de l'art tels que le « procédé Talalay™ » ou encore le « procédé Dunlop™ ». Il peut alternativement être réalisé à partir de la combinaison d'une ou de plusieurs étapes émanant de ces deux procédés.

Cet élément structurel en mousse 3a peut alternativement être réalisé en des matières de type : polyester, polymère, polyuréthane, coton, matériau à mémoire de forme ou encore une combinaison d'au moins deux de ces matières entre elles.

Dans ce mode de réalisation du dispositif de soutien 1, lorsque l'élément structurel en mousse 3a est agencé dans le logement, la face supérieure 7a de ce dernier est positionnée en regard voire en contact (par l'intermédiaire de la housse le cas échéant) avec la face intérieure 5b de la première composante 4a et la face inférieure 7b avec la face intérieure 5d de la deuxième composante 4b.

Dans ce mode de réalisation, la face inférieure 7b de l'élément structurel en mousse 3a à une forme ondulée et comprend au moins deux sommets 18a d'ondulation s'étendant sur tout ou partie de la largeur L6 de cet élément structurel 3a. Ces ondulations sont parallèles entre elles. Ces deux sommets 18a d'ondulation forment entre eux une cavité 18b d'ondulation qui est définie de manière à recouvrir en tout ou partie la partie postérieure de la membre 14 où est notamment compris le tendon 13 avec dans cette configuration, les deux sommets 18a d'ondulation qui sont localisés des deux côtés du tendon 13, droite et gauche, et qui viennent s'agencer dans le creux de ce tendon 13. La face supérieure 7a de cet élément structurel en mousse 3a est de préférence plane et comporte comme d'ailleurs la face inférieure 7b, des orifices relatifs aux canaux 10 traversant l'épaisseur E1, E2 de cet élément structurel 3a. Dans la mesure, où cet élément structurel en mousse 3a comprend plusieurs sommets 18a d'ondulations, ceux-ci sont distribués sur toute la longueur L5 de cet élément 3a.

Cet élément structurel en mousse 3a peut avoir :
- une longueur L5 comprise entre 450 et 550 mm, et de préférence de 500 mm, et
- une largeur L6 comprise entre 250 et 310 mm, et de préférence de 280 mm ;
- une épaisseur E1 entre la face supérieure 7a et un point extrémum de chaque sommet 18a d'ondulation comprise entre environ 35 et 45 mm, et de préférence 40 mm, et
- une épaisseur E2 entre la face supérieure 7a et chaque cavité 18b d'ondulation comprise entre environ 20 et 30 mm, et de préférence 25 mm.

Dans ce mode de réalisation du dispositif de soutien 1, les première, deuxième et troisième composantes 4a à 4c ainsi que l'élément structurel en mousse 3a ont une forme générale qui est celle d'un quadrilatère et dans ce mode de réalisation celle d'un rectangle.

On notera que les longueurs L3 de la deuxième composante 4b et de la housse sont de préférence inférieures à la longueur de la première composante 4a de l'enveloppe 2a afin d'entraîner une déformation du dispositif de soutien 1 pour qu'il revêt un forme générale cylindrique ou incurvée ou encore dans une forme enrobante ou galbée visible sur la figure 1.

En référence aux figures 2 à 5, lorsque ce dispositif de soutien 1 est mis en place sur la partie antérieure du membre 14, la face extérieure 5a de la première composante 4a de l'enveloppe 2a est recouverte par la face intérieure 5f de la troisième composante 4c. En effet, le dispositif de soutien 1 est configuré en fonction de l'anatomie de la partie antérieure du membre 14 à soutenir afin que la face extérieure 5a de la première composante 4a ne soit pas recouverte par la face intérieure 5c de la deuxième composante 4b. Autrement dit, les première et deuxième composantes 4a, 4b ne sont pas superposées lorsque le dispositif 1 est positionné sur la partie antérieure du membre 14 à soutenir. Ce dispositif de soutien 1 peut être positionné au niveau de toute partie antérieure du membre 14 du cheval pour le maintien des systèmes tendineux et ligamentaires et également des tissus mous - les tendons, muscles - ainsi que d'articulations. Il peut également être utilisé dans le domaine médical relatif aux êtres humain. Dans cette configuration, lorsque les premier et les deuxième éléments de fixation 6a, 6b coopèrent entre eux, l'élément structurel 3a est alors partiellement voire totalement comprimé.

Le dispositif de soutien 1 en comprenant l'élément structurel en mousse 3a compris dans l'enveloppe 2a permet d'apporter un support optimal et adaptable sur les tendons fléchisseurs, les tendons extenseurs, les tendons perforants, les tendons perforés, les ligaments suspenseurs du boulet, les tendons extenseurs antérieurs des phalanges, les tendons extenseurs des phalanges des quatre membres et/ou la bride carpienne du perforant.

Un tel dispositif de soutien 1 peut contribuer du fait notamment que l'élément structurel en mousse 3a comprend une pluralité de canaux 10, à assurer une diffusion uniforme ou ciblée de produits de traitement de maladies inflammatoires ou relatives au système circulatoire. Ce dispositif 1 permet également d'assurer une protection du membre 14 du cheval contre les chocs, les morsures et les bactéries ainsi que contre la présence de corps étranger sur une blessure.

Il permet également de réaliser un apport de chaleur sur la partie antérieure du membre 14 à soutenir et d'assurer le repos de tendons de cette partie notamment du fait que l'enveloppe 2a et donc le dispositif 1 présente une forme incurvée/moulante permettant d'assurer une pression uniforme sur la partie antérieure de ce membre 14.

Un tel dispositif de soutien 1 revêt également des propriétés orthopédiques en assurant alors au cheval un confort, une bonne circulation sanguine et une bonne activité neurologique. Ce dispositif 1 peut également procurer au cheval un effet massant au niveau de cette partie antérieure du membre 14 qui est en contact avec l'enveloppe 2a.

Cet effet massant peut contribuer à soigner des blessures et/ou à améliorer le flux sanguin et les influx nerveux du cheval.

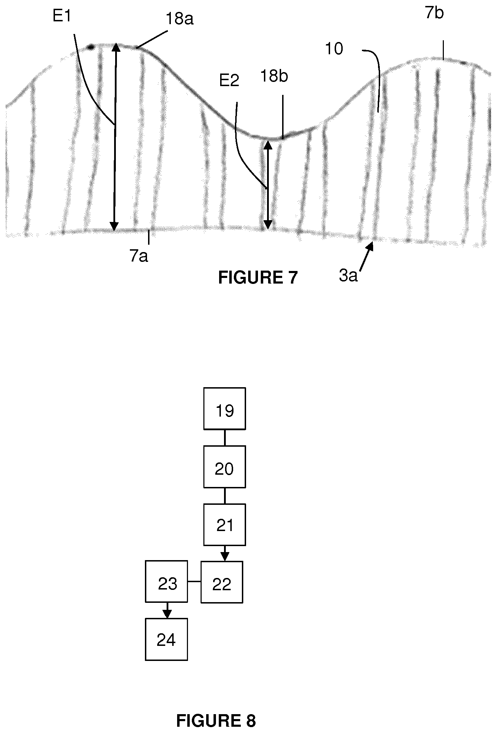

Un aspect de l'invention concerne un procédé de fabrication de ce dispositif de soutien 1 d'un animal tel que le cheval et en particulier d'une partie antérieure de ce membre 14, représenté sur la figure 8. Ce procédé comprend une étape de réalisation 19 de l'enveloppe 2a comportant une étape d'assemblage 20 de la première composante 4a avec la deuxième composante 4b de sorte à définir le logement dans lequel l'élément structurel en mousse 3a est positionné.

Par la suite, le procédé comprend une étape d'agencement 22 de cet élément structurel en mousse 3a dans l'enveloppe 2a comprise dans ledit dispositif de soutien 1. Ce procédé peut prévoir une étape d'insertion 21 de l'élément structurel en mousse 3a dans la housse maillé avant la réalisation de l'étape d'agencement 22.

Par la suite, le procédé comprend une étape d'assemblage 23 de la troisième composante 4c pourvue d'au moins un premier élément de fixation 6a sur sa face intérieure 5f avec la première composante 4a pourvue d'au moins un deuxième élément de fixation 6b sur sa face extérieure 5a. Dans cette configuration, le procédé prévoit ensuite une étape de réalisation 24 d'une ouverture pourvue du mécanisme d'ouverture/fermeture 9 dans la face extérieure 5a de la première composante 4a.

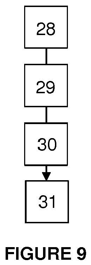

Un autre aspect de l'invention concerne un procédé d'utilisation du dispositif de soutien 1 d'un membre 14 d'un animal tel que le cheval représenté sur la figure 9.

Ce procédé comprend une étape de mise en place 28 du dispositif de soutien 1 sur le membre 14 à soutenir comprenant en particulier une étape de positionnement 29 de l'enveloppe 2a sur la partie antérieure du membre 14. Plus précisément, lors de l'étape de positionnement 29, la face extérieure 5c de la deuxième composante 4b est positionnée en contact avec la partie antérieure du membre 14 à soutenir. Par la suite, ce procédé prévoit une étape de verrouillage 30 du dispositif de soutien 1 sur la partie antérieure du membre 14 à partir de chaque premier et deuxième élément de fixation 6a, 6b. Lors de cette étape de verrouillage 30, l'élément structurel en mousse 3a peut être partiellement voire totalement comprimé. Ce procédé peut prévoir ensuite une étape de pose 31 d'une bande autour du dispositif de soutien 1 afin de créer une tension au niveau de la partie antérieure du membre 14 du cheval, cette tension étant transmise de manière uniforme/homogène au niveau de cette partie antérieure par le dispositif de soutien 1. Autrement dit, le dispositif de soutien 1 permet de répartir de manière uniforme/homogène cette tension au niveau de cette partie antérieure.

La présente invention n'est pas limitée au mode de réalisation qui a été explicitement décrit, mais elle en inclut les diverses variantes et généralisations contenues dans le domaine des revendications ci-après.

## Revendications

1. Dispositif de soutien (1) d'un système tendineux et ligamentaire du membre (14) d'un animal, notamment d'un cheval, comprenant un élément structurel en mousse (3a) et une enveloppe (2a) apte à être agencée au niveau d'une partie antérieure dudit membre (14), cette enveloppe (2a) comprenant un logement de forme complémentaire à celle de l'élément structurel en mousse (3a) agencé dans ce logement, l'élément structurel en mousse (3a) comprenant une pluralité de canaux (10) reliant des faces supérieure et inférieure (7a, 7b) dudit élément structurel (3a) entre elles, ces canaux (10) étant répartis de manière homogène dans une épaisseur (E1, E2) de cet élément structurel en mousse (3a) et traversant l'épaisseur (E1, E2) de cet élément structurel en mousse, la face inférieure de l'élément structurel en mousse (3a) comprenant au moins deux sommets (18a) d'ondulation parallèles entre eux et s'étendant sur tout ou partie de sa largeur, ces deux sommets (18a) d'ondulation formant entre eux une cavité (18b) d'ondulation qui est définie de manière à recouvrir en tout ou partie la partie postérieure dudit membre (14) où est compris le tendon (13) avec dans cette configuration, les deux sommets (18a) d'ondulation localisés des deux côtés du tendon (13), droite et gauche, et qui viennent s'agencer dans le creux de ce tendon 13.

2. Dispositif (1) selon la revendication précédente, **caractérisé en ce que** chaque canal (10) a une section de forme circulaire ayant un diamètre compris entre 3500 et 4500 µm, et **en ce que** le centre de chaque canal (10) est espacé du centre d'un autre canal (10) situé dans sa proximité immédiate, d'une distance comprise entre 7500 et 11500 µm.

3. Dispositif (1) selon la revendication 1 ou 2, **caractérisé en ce que** l'élément structurel en mousse (3a) comprend une face supérieure (7a) sensiblement plane et une face inférieure (7b) ondulée comprenant au moins deux sommets d'ondulation (18a), et comprenant une épaisseur (E1) entre la face supérieure (7a) et un point extrémum de chaque sommet (18a) d'ondulation comprise entre environ 35 et 45 mm, et une épaisseur (E2) entre la face supérieure (7a) et chaque cavité (18b) d'ondulation comprise entre environ 20 et 30 mm.

4. Dispositif selon l'une des revendications précédentes, **caractérisé en ce que** l'enveloppe (2a) comprend des première et deuxième composantes (4a, 4b) formant un logement dans lequel l'élément structurel en mousse (3a) est susceptible d'être positionné.

5. Dispositif (1) selon l'une quelconque des revendications précédentes, **caractérisé en ce qu'**il comprend une housse maillé dans laquelle est inséré l'élément structurel en mousse (3a) avant d'être agencé dans un logement de ladite enveloppe (2a).

6. Dispositif (1) selon l'une quelconque des revendications précédentes, **caractérisé en ce que** ladite enveloppe (2a) comprend une ouverture (12) pourvue d'un mécanisme de fermeture/ouverture (9) d'un logement de ladite enveloppe (2a).

7. Dispositif (1) selon l'une quelconque des revendications précédentes, **caractérisé en ce que** des première et deuxième composantes (4a, 4b) de ladite enveloppe (2a) sont reliées entre elles de manière amovible.

8. Dispositif (1) selon l'une quelconque des revendications précédentes, **caractérisé en ce que** :
- ladite enveloppe (2a) comprend une troisième composante (4c) comprenant une face intérieure (5f) pourvue d'au moins un premier élément de fixation (6a), et/ou
- l'élément structurel en mousse (3a) comprend une face supérieure (7a) sensiblement plane et une face inférieure (7b) ondulée comprenant au moins deux sommets d'ondulation (18a), et/ou
- une première composante (4a) de ladite enveloppe (2a) comprend une face extérieure (5a) pourvue d'au moins un deuxième élément de fixation (6b), et/ou
- une première composante (4a) est réalisée dans une matière non-extensible et une deuxième composante (4b) dans une matière extensible.

9. Dispositif (1) selon l'une quelconque des revendications précédentes, **caractérisé en ce qu'**il a une forme générale incurvée.

10. Dispositif (1) selon l'une quelconque des revendications précédentes, **caractérisé en ce qu'**il est défini de manière à assurer un maintien des systèmes ligamentaires et tendineux localisés au niveau de ladite partie antérieure dudit membre (14).

11. Procédé de fabrication d'un dispositif de soutien (1) d'un membre (14) d'un animal, notamment d'un cheval, selon l'une quelconque des revendications précédentes comprenant une étape d'agencement (22) d'un élément structurel en mousse (3a) dans une enveloppe (2a) comprise dans ledit dispositif de soutien (1).

12. Procédé selon la revendication précédente, **caractérisé en ce qu'**il comprend une étape d'assemblage (20) d'une première composante (4a) avec une deuxième composante (4b) de ladite enveloppe (2a) de sorte à définir un logement dans lequel l'élément structurel en mousse (3a) est agencé.

13. Procédé d'utilisation d'un dispositif de soutien (1) d'un membre (14) d'un animal, notamment d'un cheval, selon l'une quelconque des revendications 1 à 10 comprenant une étape de mise en place (28) du dispositif de soutien (1) sur ledit membre (14), l'étape de mise en place (28) comprenant une étape de positionnement (29) d'une enveloppe (2a) du dispositif de soutien (1) sur une partie antérieure dudit membre (14) notamment pourvue de systèmes ligamenteux et tendineux de l'animal.

14. Procédé d'utilisation selon la revendication précédente, **caractérisé en ce qu'**il comprend une étape de verrouillage (30) dudit dispositif de soutien (1) sur ladite partie antérieure à partir d'au moins un des premier et deuxième éléments de fixation (6a, 6b)

## Patentansprüche

1. Stützvorrichtung des Sehnen- und Bandapparates der Gliedmaße (14) eines Tieres, insbesondere eine Pferdes, umfassend ein Strukturelement aus Schaumstoff (3a) und eine Hülle (2a), die dazu geeignet ist, auf Höhe eines vorderen Teils der genannten Gliedmaße (14) angeordnet zu werden, wobei diese Hülle (2a) eine Aufnahme umfasst, die komplementär zu dem Strukturelement aus Schaumstoff (3a) in dieser Ausnehmung angeordnet ist, wobei das Strukturelement aus Schaumstoff (3a) eine Vielzahl an Kanälen (10) umfasst, die die Oberseite und die Unterseite (7a, 7b) des genannten Strukturelements (3a) untereinander verbinden, wobei diese Kanäle (10) homogen in einer Schicht (E1, E2) dieses Strukturelements aus Schaumstoff (3a) verteilt sind und die Schicht (E1, E2) dieses Strukturelements aus Schaumstoff (3a) durchdringen, wobei die Unterseite des Strukturelements aus Schaumstoff (3a) wenigstens zwei parallele Wellenberge (18a) umfasst, die zwischen sich ein Wellental (18b) bilden, die so definiert ist, dass sie im Ganzen oder teilweise den hinteren Teil der genannten Gliedmaße (14) bedeckt, wo die Sehne (13) verläuft, wobei, in dieser Konfiguration, die zwei Wellenberge (18a) an beiden Seiten der Sehne (13) liegen, rechts und links, und die sich in die Vertiefung dieser Sehne (13) einfügen.

2. Vorrichtung gemäß dem vorangehenden Anspruch, **dadurch gekennzeichnet, dass** jeder Kanal (10) einen kreisförmigen Querschnitt aufweist mit einem Querschnitt , der einen Durchmesser zwischen 3500 und 4500 µm aufweist und, dass die Mitte eines jeden Kanals von der Mitte eines anderen, in seiner unmittelbaren Nähe gelegenen Kanals (10) einen Abstand zwischen 7500 und 11500 µm aufweist.

3. Vorrichtung (1) gemäß einem der Ansprüche 1 oder 2, **dadurch gekennzeichnet, dass** das Strukturelement aus Schaumstoff (3a) eine im Wesentlichen ebene Oberseite (7a) und eine gewellte Unterseite (7b) aufweist, umfassend wenigstens zwei Wellenberge (18a) und umfassend eine Schicht (E1) zwischen der Oberseite (7a) und einen Extrempunkt eines jeden Wellenberges (18a) zwischen etwa 35 und 45 mm, und eine Schicht (E2) zwischen der Oberseite (7a) und jedem Wellental (18b) zwischen etwa 20 und 30 mm.

4. Vorrichtung (1) gemäß einem der vorangehenden Ansprüche, **dadurch gekennzeichnet, dass** die Hülle (2a) erste und zweite Bestandteile (4a, 4b) umfasst, die eine Aufnahme bilden, in welche das Strukturelement aus Schaumstoff (3a) eingelegt werden kann.

5. Vorrichtung (1) gemäß einem der vorangehenden Ansprüche, **dadurch gekennzeichnet, dass** sie einen netzartigen Überzug umfasst, in welchen das Strukturelement aus Schaumstoff (3a) eingeschoben wird, bevor es in einer Aufnahme der genannten Hülle (2a) angeordnet wird.

6. Vorrichtung (1) gemäß einem der vorangehenden Ansprüche, **dadurch gekennzeichnet, dass** die genannte Hülle (2a) eine Öffnung (12) umfasst, die mit einem Öffnungs-/Schließmechanismus (9) einer Aufnahme der genannten Hülle (2a) versehen ist.

7. Vorrichtung (1) gemäß einem der vorangehenden Ansprüche, **dadurch gekennzeichnet, dass** erste und zweite Bestandteile (4a, 4b) der genannten Hülle (2a) untereinander abnehmbar verbunden sind.

8. Vorrichtung (1) gemäß einem der vorangehenden Ansprüche, **dadurch gekennzeichnet, dass**
• die genannte Hülle (2a) einen dritten Bestandteil (4c) aufweist, umfassend eine Innenseite (5f), die mit mindestens einem ersten Befestigungselement (6a) versehen ist, und/oder
• das Strukturelement aus Schaumstoff (3a) eine im Wesentlichen ebene Oberseite (7a) umfasst und eine gewellte Unterseite (7b) umfassend wenigstens zwei Wellenberge (18a), und/oder
• ein erster Bestandteil (4a) der genannten Hülle (2a) eine Außenseite (5a) umfasst, die mit mindestens einem zweiten Befestigungselement (6b) versehen ist, und/oder
• ein erster Bestandteil (4a) aus einem nicht dehnbaren Material und ein zweiter Bestandteil (4b) aus einem dehnbaren Material gefertigt ist.

9. Vorrichtung (1) gemäß einem der vorangehenden Ansprüche, **dadurch gekennzeichnet, dass** sie eine im Allgemeinen gekrümmte Form aufweist.

10. Vorrichtung (1) gemäß einem der vorangehenden Ansprüche, **dadurch gekennzeichnet, dass** sie so ausgebildet ist, dass sie einen Halt der Sehnen- und Bandapparate in dem genannten vorderen Bereich der genannten Gliedmaße (14) sicherstellt.

11. Herstellungsverfahren für eine Stützvorrichtung (1) einer Gliedmaße (14) eines Tieres, insbesondere eines Pferdes gemäß einem der vorangehenden Ansprüche umfassend einen Schritt zur Anordnung (22) eines Strukturelements aus Schaumstoff (3a) in einer in der genannten Stützvorrichtung (1) enthaltenen Hülle (2a).

12. Herstellungsverfahren gemäß dem vorangehenden Anspruch, **dadurch gekennzeichnet, dass** es ein einen Schritt zum Zusammenfügen (20) eines ersten Bestandteils (4a) mit einem zweiten Bestandteil (4b) der genannten Hülle (2a) derart, dass eine Aufnahme geschaffen wird, in welcher das Strukturelement aus Schaumstoff (3a) angeordnet wird.

13. Verfahren zur Verwendung einer Stützvorrichtung (1) einer Gliedmaße (14) eines Tieres, insbesondere eines Pferdes, gemäß einem der Ansprüche 1 bis 10, umfassend einen Schritt zur Anordnung (28) der Stützvorrichtung (1) auf der genannten Gliedmaße (14), wobei der Schritt zur Anordnung (28) einen Schritt zur Positionierung (29) einer Hülle (2a) der Stützvorrichtung (1) auf einem vorderen Teil der Gliedmaße (14), insbesondere auf dem mit den Sehnen- und Bandapparaten des Tieres versehenen Teil umfasst.

14. Verfahren zur Verwendung gemäß dem vorangehenden Anspruch, **dadurch gekennzeichnet, dass** es einen Schritt zur Befestigung (30) der genannten Stützvorrichtung (1) auf dem vorderen Teil umfasst, anhand wenigstens eines der ersten und zweiten Befestigungselemente (6a, 6b).

## Claims

1. Device (1) for supporting a tendon and ligament system of the limb (14) of an animal, in particular a horse, comprising a structural foam element (3a) and an envelope (2a) able to be arranged at an anterior part of said limb (14), this envelope (2a) comprising a recess with a shape complementing that of the structural foam element (3a) arranged in this recess, the structural foam element (3a) comprising a plurality of channels (10) connecting upper and lower faces (7a, 7b) of said structural element (3a) to each other, these channels (10) being distributed uniformly in a thickness (E1, E2) of this structural foam element (3a) and passing through the thickness (E1, E2) of this structural foam element, the lower face of the structural foam element (3a) comprising at least two wave peaks (18a) parallel to each other and extending over all or part of its length, these two wave peaks (18a) forming between them a wave cavity (18b) which is defined in such a way as to completely or partially cover the posterior part of said limb (14) where the tendon (13) is included, with in this configuration the two wave peaks (18a) being located on both sides of the tendon (13), i.e. to the right and left, and which arrange themselves in the hollow of this tendon (13).

2. Device (1) according to the preceding claim, **characterized in that** each channel (10) has a circular cross section having a diameter of between 3500 and 4500 µm, and **in that** the centre of each channel (10) is spaced apart from the centre of another channel (10), situated in its immediate proximity, by a distance of between 7500 and 11500 µm.

3. Device (1) according to Claim 1 or 2, **characterized in that** the structural foam element (3a) comprises a substantially plane upper face (7a) and an undulating lower face (7b) comprising at least two wave peaks (18a), and comprising a thickness (E1), between the upper face (7a) and an extreme point of each wave peak (18a), of between about 35 and 45 mm, and a thickness (E2), between the upper face (7a) and each wave cavity (18b), of between about 20 and 30 mm.

4. Device according to one of the preceding claims, **characterized in that** the envelope (2a) comprises first and second components (4a, 4b) forming a recess in which the structural foam element (3a) is able to be positioned.

5. Device (1) according to any one of the preceding claims, **characterized in that** it comprises a mesh cover in which the structural foam element (3a) is inserted before being arranged in a recess of said envelope (2a).

6. Device (1) according to any one of the preceding claims, **characterized in that** said envelope (2a) comprises an opening (12) provided with a mechanism (9) for closing/opening a recess of said envelope (2a) .

7. Device (1) according to any one of the preceding claims, **characterized in that** first and second components (4a, 4b) of said envelope (2a) are connected to each other removably.

8. Device (1) according to any one of the preceding claims, **characterized in that**:
- said envelope (2a) comprises a third component (4c) comprising an inner face (5f) provided with at least one first fixing element (6a), and/or
- the structural foam element (3a) comprises a substantially plane upper face (7a) and an undulating lower face (7b) comprising at least two wave peaks (18a), and/or
- a first component (4a) of said envelope (2a) comprises an outer face (5a) provided with at least one second fixing element (6b), and/or
- a first component (4a) is made of a non-extensible material and a second component (4b) is made of an extensible material.

9. Device (1) according to any one of the preceding claims, **characterized in that** it has a curved overall shape.

10. Device (1) according to any one of the preceding claims, **characterized in that** it is defined to provide support of the ligament and tendon systems located at said anterior part of said limb (14).

11. Method for producing a device (1) for supporting a limb (14) of an animal, in particular a horse, according to any one of the preceding claims, comprising a step (22) of arranging a structural foam element (3a) in an envelope (2a) included in said support device (1).

12. Method according to the preceding claim, **characterized in that** it comprises a step (20) of joining a first component (4a) to a second component (4b) of said envelope (2a) in such a way as to define a recess in which the structural foam element (3) is arranged.

13. Method for use of a device (1) for supporting a limb (14) of an animal, in particular a horse, according to any one of Claims 1 to 10, comprising a step (28) of placing the support device (1) on said limb (14), the placement step (28) comprising a step (29) of positioning an envelope (2a) of the support device (1) on an anterior part of said limb (14), in particular one provided with ligament and tendon systems of the animal.

14. Method for use according to the preceding claim, **characterized in that** it comprises a step (30) of locking said support device (1) on said anterior part using at least one of the first and second fixing elements (6a, 6b).
